# DEMANDE DE BREVET EUROPEEN

(11) **EP 1 731 028 A1**
(43) Date de publication de la demande: **13.12.2006**
(21) Numéro de dépôt: 05701672.7
(22) Date de dépôt: 13.01.2005
(51) Int. Cl.: A01K 31/08

(54) **CAGE PLIANTE A FOND JETABLE POUR ANIMAUX DOMESTIQUES**

(30) Priorité: 12.02.2004 ES 200400308 U
(71) Demandeur: Cabrera Garcia, Francisco Javier, 41089 Sevilla (ES)
(72) Inventeur: Cabrera Garcia, Francisco Javier, 41089 Sevilla (ES)
(86) Numéro de dépôt international: PCT/ES2005/000017
(87) Numéro de publication internationale: WO 2005/077160

(57) **Abrégé**

Cage domestique pliante et à fond jetable, constituée d'une grille de périmètre avec jointures articulées, angles pliables et ouvertures pratiques, à laquelle se fixent grâce à des crochets et/ou des rebords, une grille supérieure avec anse inclinable et une grille inférieure. A la base se fixe une base démontable constituée par le pliage d'un plateau laminaire massicoté et qui comporte un socle. La grille de périmètre possède des extensions inférieures délimitant la position et l'appui de la base à l'intérieur ainsi que des crochets pour la fixation de son socle. Le plateau est constitué d'une partie central quadrangulaire constitutive du fond, dotée de prolongements latéraux formant le socle, ayant deux de ces prolongements se faisant face avec extensions frontales et languettes à leurs extrémités, à glisser dans les fentes du fond en pliant suivant les prolongements respectifs, recevant et fixant grâce à ces plis les autres extensions latérales des deux autres prolongements se faisant face. Les extensions frontales et les prolongements desquels elles proviennent, ont des fenêtres pratiques qui, avec la configuration de la base, forment des ouvertures pour accrocher des mangeoires extérieures, se situant en adéquation avec les autres fentes des extensions latérales des deux autres prolongements de la base, et avec a cet endroit des courbures sur les barreaux de la grille de périmètre permettant aux oiseaux de sortir la tête pour manger ; les fentes où s'enfilent les languettes, se situent dans tes prolongements de la base. Les crochets se fixent sur les barres transversales horizontales de la grille de périmètre et possèdent des rebords de désenclenchement.

## Description

### Objet de l'invention

La présente invention se rapporte à une cage domestique pliante a fond jetable.

### Antécédents de l'invention

Actuellement nous connaissons les cages a usage domestique, constituées d'une grille non démontable qui occupe un espace considérable, a laquelle s'ajoute une autre grille inférieure, démontable et lavable qui referme la cage, et également une base ou plateau extractible pour récupérer les excréments de l'animal, qui ne s'échappe pas grâce a la grille inférieure de fermeture.

Le problème de ces cages est qu'elles ne sont pas démontables, et de ce fait, occupent un espace considérable pour leur transport et leur rangement. D'un autre côté, il est difficile et désagréable de nettoyer la base ou le plateau des excréments des oiseaux ; inconvénients qui surmontent grâce à l'utilisation de la cage de l'invention.

### Description de l'invention

La cage de l'invention possède une constitution simple qui permet un transport et un rangement facile, n'occupant que peu de place, et contourne la nécessité de nettoyer la base récupérant les excréments des oiseaux.

conformément à invention, la cage est constituée d'une grille de périmètre pliable, a laquelle se fixent des grilles de fermeture démontables, en haut et en bas. En dessous s'installe un plateau ou base constituée grâce au pliage d'un plateau laminaire massicoté fait en matériel jetable et/ou recyclable, bon marché comme le carton, plastique, etc., ce qui permet de la jeter après usage et de la remplacer par une nouvelle, sans avoir le besoin de la nettoyer.

La grille de périmètre comprend différents morceaux unis entre eux grâce aux articulations renforcées, qui permettent son pliage afin d'obtenir une posture essentiellement plane, raccordant respectivement les grilles supérieure et inférieure grâce aux rebords et/ou crochets, consolidant la position dépliée du périmètre. La grille supérieure possède une anse inclinable pour faciliter son transport lorsque la cage est montée.

Certains des morceaux constitutifs de la grille de périmètre peuvent incorporer des ouvertures praticables pour l'introduction et/ou l'extraction des oiseaux.

La partie inférieure de la grille est pourvue de moyens permettant la fixation démontable de la base. Ces moyens sont essentiellement des crochets tournant sur un axe horizontal et pourvus de rebord qui facilitent son desenclenchement des fentes faites dans le socle de la base.

Le plateau qui par son pliage constitue la base, comprend une partie centrale avec prolongements latéraux constitutifs du socle. Certains de ces prolongements possèdent des extensions frontales avec rebords, pour enclencher dans les fentes de la partie centrale, se pliant sous les prolongements correspondants, recevant et fixant ces plis d'autres extensions latérales des prolongements adjacents de la partie centrale. C'est dans certains des prolongements que se font logiquement les fentes dans lesquelles il faut enclencher les crochets.

Enfin le plateau incorpore dans certaines de ses extensions frontales, dans les prolongements desquels ils proviennent, ainsi que dans les extensions latérales des prolongements adjacents, des fenêtres ou fentes qui donnent forme au pliage du plateau des endroits ou il est possible d'installer des mangeoires extérieures pour les oiseaux, avec des embrasures dans la grille pour que les oiseaux puissent sortir la tête et accéder à la mangeoire, mais logiquement de taille adéquate pour empêcher que l'oiseau puisse s'échapper lorsque l'on retire la mangeoire pour la changer ou nettoyer.

### Brève description des dessins

La figure 1 montre une détaillée de la cage de l'invention
Les figures 2 et 3 montrent chacune des variantes de récusation de la cage de l'invention avec la grille supérieure plane ou convexe.

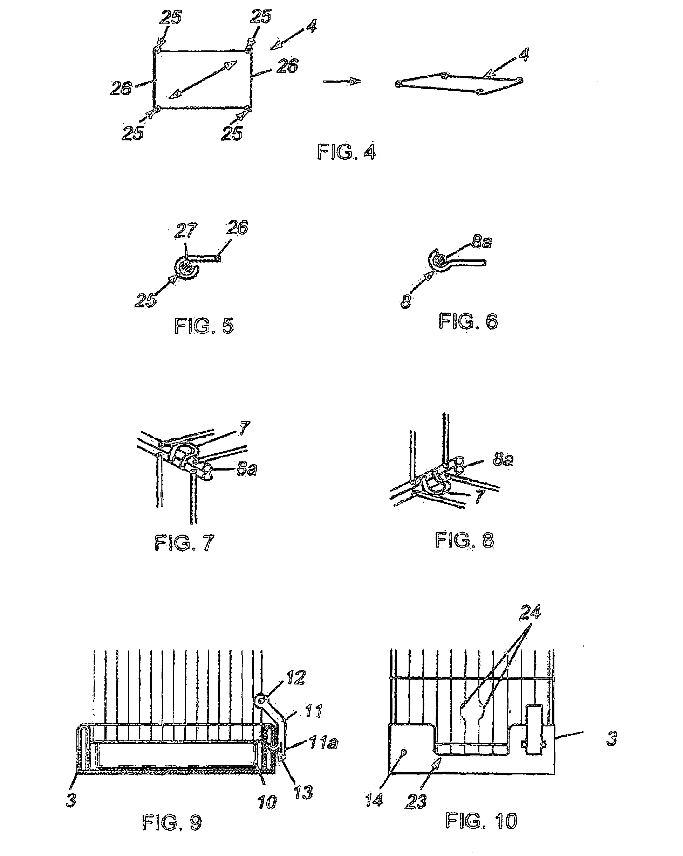

La figure 4 montre schématiquement une vue plane du pliage de la grille de périmètre de la cage de l'invention.
La figure 5 montre un détail de l'union articulée entre les morceaux de la grille de périmètre de la cage de l'invention.
La figure 6 montre un détail de l'union grâce au crochet de la grille de périmètre à la supérieure.
Les figures 7 et 8 montrent respectivement la fixation des grilles supérieure et inférieure a celle de périmètre, grâce aux rebords.
La figure 9 montre une section longitudinale de la zone de la base de la cage de l'invention

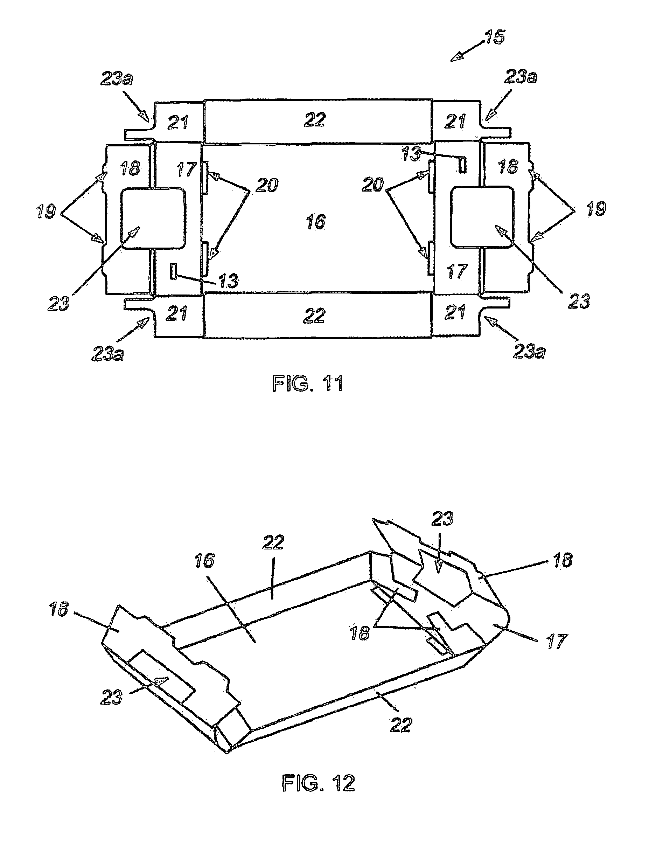

La figure 10 montre un détail latéral du socle de la base de la cage de l'invention.
La figure 11 montre une vue du plateau de la base de la cage de l'invention
La figure 12 montre une étape intermédiaire du pliage du plateau de la cage de l'invention.

### Description d'une réalisation pratique de l'invention

La cage 1 de l'invention est constituée d'une grille 2 et d'une base 3 démontable qui s'y attache. La grille comprend une grille de périmètre 4 avec quatre morceaux articulés, attachés entre eux par leurs extrémités pour pouvoir se plier, ayant ainsi une posture essentiellement plane, et des grilles supérieure 5 et inférieure 6 démontables qui se fixent a la grille de périmètre grâce aux rebords 7 et/ou aux crochets 8, qui reçoivent et/ou se fixent aux barreaux d'extrémité 8a d'une grille ou autre, permettant de maintenir une position dépliée de la grille de périmètre.

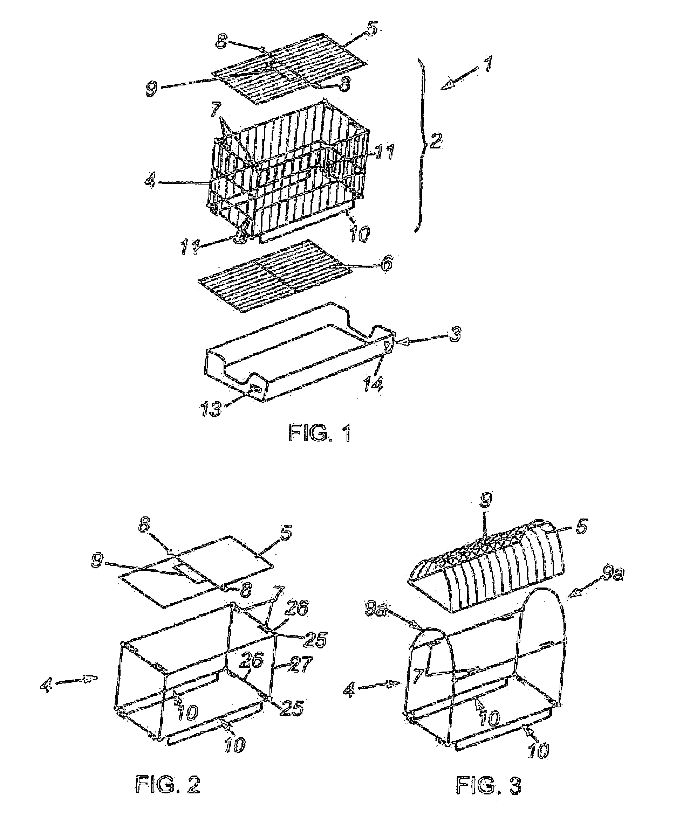

La grille supérieure 5possède une anse inclinable 9, et peut être constituée de barreaux droits, comme on peut le voir sur les figures 1 et 2, permettant à la grille d'avoir une configuration essentiellement plane, ou des barreaux courbes, comme on peut le voir sur la figure 3, permettant une configuration en forme de demie canne, avec des extrémités convexes 9a de la grille de périmètre. L'existence de la grille inférieure est nécessaire pour éviter que l'oiseau s'échappe lors du changement de la base.

En bas la cage de périmètre on trouve également des extrémités 10 qui permettent de délimiter et positionner le fond de la base en appuyant dessus et également des crochets fixés 11 tournant autour de barres transversales 12 de la grille de périmètre, qui s'accrochent dans les fentes latérales 13 d'un socle 14 de la base. Les crochets ont des rebords 11a à leurs extrémités qui facilitent leur desenclenchement manuel.

La base est constituée par un plateau laminaire massicoté 15 en carton, qui comprend une partie centrale quadrangulaire de fond 16 avec des prolongements latéraux conformes au socle 14. Deux de ces prolongements 17 ont des extensions frontales 18 avec languettes 19 à engager dans les fentes 20 du fond en pliant les prolongements 17 pour former le socle, recevant et fixant à ce pli d'autres extensions latérales 21 des deux autres prolongements latéraux 22 du fond. Les prolongements 17 et leurs extensions 18 ont des fenêtres 23 faites pour pouvoir accrocher les mangeoires extérieures, non représentées, une fois la base pliée, en rapport avec d'autres fentes 23a des extensions latérales 21 et de plis 24 des barreaux des morceaux du périmètre des grilles de cette zone pour permettre aux oiseaux de sortir la tête et accéder aux mangeoires.

Logiquement, pour les zones en relation avec les crochets 11 de la grille, les prolongements 17 et/ou 22 possèdent des fentes pratiques.

Enfin, l'articulation entre les morceaux latéraux de la grille de périmètre, se constitue grâce aux plis arrondis 25 de certains de ses barreaux horizontaux 26 qui entourent les barreaux des extrémités verticales 27 du morceau adjacent.

La nature de l'invention est suffisamment décrite, de même que la manière de la réaliser en pratique. Il faut observer que les dispositions indiquées précédemment et représentées sur les dessins joints, sont susceptibles de modifications minimes du moment que cela n'altère pas le principe fondamental.

## Revendications

1. Cage domestique pliante à fond jetable, constituée d'une grille de périmètre avec jointures articulées, angles pliables, et ouvertures pratiques, à laquelle se fixent grâce à des crochets et/ou rebords, une grille supérieure avec anse inclinable y une grille inférieure. A la cage si fixe une base démontable, constituée par le pliage d'un plateau laminaire massicoté et d'un petit socle. La grille de périmètre possède des extensions inférieures qui délimitent la position et l'appui de la base par l'intérieur, ainsi que des crochets de fixation pour le socle. Le plateau est constitué d'une partie centrale quadrangulaire constitutive du fond, dotée de prolongements latéraux forment le socle, avec deux de ces prolongements se faisant face ayant chacun des extensions frontales avec languettes aux extrémités pour les glisser dans les fentes du fond en pliant suivant les prolongements respectifs, recevant et fixant grâce à ces plis, les autres extensions latérales des deux autres prolongements du fond se faisant face. Les extensions frontales et les prolongements desquels elles proviennent, ont des fenêtres pratiques qui, avec la configuration de la base, forment des ouvertures pour accrocher des mangeoires extérieures, se situent en adéquation avec les autres fentes des extensions latérales des deux autres prolongements de la base, et avec à cet endroit des courbures sur les barreaux de la grille de périmètre permettant aux oiseaux de sortir la tête pour manger ; les fentes où s'enfilent les languettes, se situent dans les prolongements de la base.

2. Cage selon revendication 1 **caractérisée** pour que les crochets se fixent sur les barres transversales horizontales de la grille de périmètre et qu'elle ait des rebords de désenclenchement.
